# EUROPEAN PATENT APPLICATION

(11) **EP 0 858 918 A1**
(43) Date of publication of application: **19.08.1998**
(21) Application number: 98301189.1
(22) Date of filing: 18.02.1998
(51) Int. Cl.: B60G 17/015, B60G 21/06

(54) **Anti-roll suspension systems for vehicles**

(30) Priority: 18.02.1997 GB 9703301; 18.02.1997 GB 9703361
(71) Applicant: Mumford, Michael Anthony, Peterborough, Cambridgeshire PE5 7AE (GB)
(72) Inventor: Mumford, Michael Anthony, Peterborough, Cambridgeshire PE5 7AE (GB)
(74) Representative: Archer, Philip Bruce

(57) **Abstract**

Roll control systems for highway vehicles provide hydro-pneumatic and mechanical (torsion) resistance to vehicle pitch and roll. In the hydro-pneumatic system double-acting piston/cylinder assemblies (214,214',215,215') connected headside-to-rodside in laterally-spaced pairs provide roll and pitch control in combination with resilient suspension compliance. An accelerometer (220) predicts the level of roll control required and an engine-powered displacer (209) injects the required hydraulic fluid volume to produce zero roll and (if wished) a soft ride. In the mechanical embodiments the roll bar (50) extends longitudinally from its front/rear axle couplings to a body mounting (54) in the region of the vehicle centre of gravity.

## Description

This invention relates to anti-roll and anti-pitch suspension systems for vehicles. More particularly, a first aspect of the invention relates to vehicles incorporating suspension systems in which an anti-roll function is provided by incorporating a torque-resistant element. A second aspect of the invention relates to systems in which roll and/or pitch control is provided by a hydro-pneumatic system.

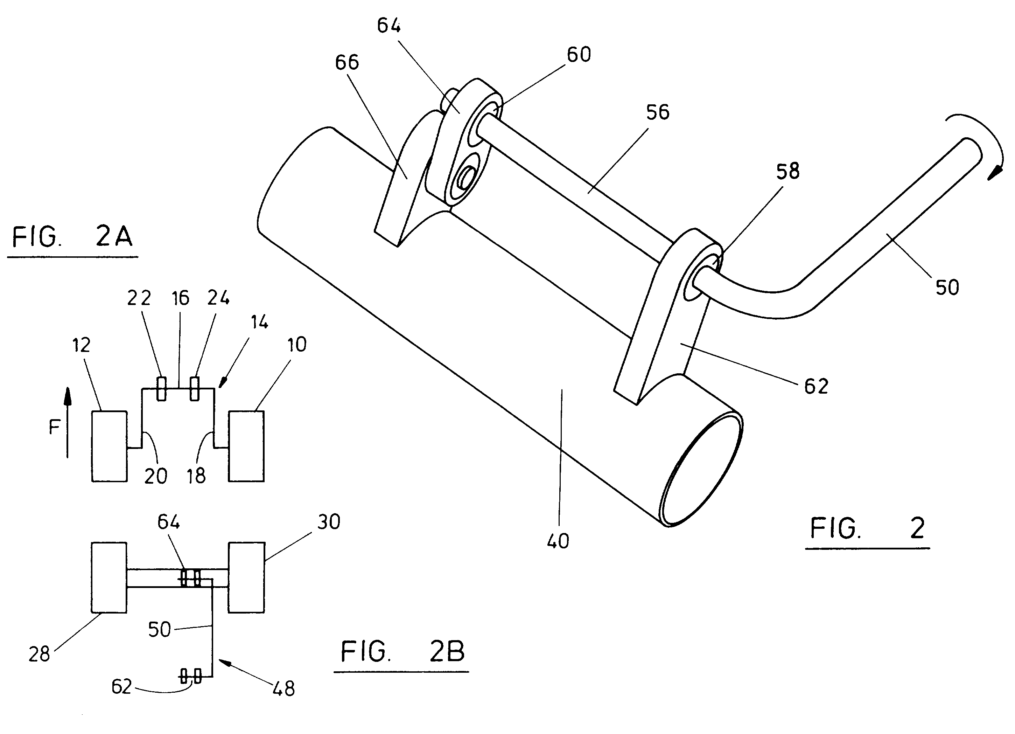

Conventionally, a car or automobile suspension system incorporating an anti-roll bar comprises a structure as illustrated in Fig 2A in which the front wheels 10, 12 of a vehicle having a normal forward travel direction F are interconnected by an anti-roll bar 14 comprising a torque-resistant element or bar 16 having integral torque-applying arms or elements 18, 20 connected to wheels 10, 12. Bar 16 is connected to the vehicle body by pivot mountings 22, 24.

In use, the conventional system of Fig 2A provides no resistance to parallel up-and-down movement of the vehicle body relative to wheels 10, 12 and vice versa. However, when the vehicle corners and the vehicle body tends to dip on its resilient suspension in the opposite direction to the direction of turn, the effect is that the pivot mounting 22 or 24 on the side of the vehicle on which the body tends to dip is thereby lowered so that the torque-applying arm 20 or 18 on that side of the vehicle is effectively raised with respect to bar 16 and thereby generates torque therein so that such rolling of the vehicle body is thereby resilient resisted.

Shortcomings of this conventional system include the following. Firstly, the resistance to vehicle body roll is applied to the vehicle at the forward location of pivot mountings 22, 24 whereas the vehicle can be considered to behave as if its mass were largely centred in the region of the centre of gravity of the vehicle, which is not at the front end of the vehicle body. Effectively therefore there is a requirement for the vehicle body itself to transmit the roll-resistance function through its own structure to the front location of pivot mountings 22, 24. This is an ineffective way to resist vehicle roll since the vehicle body itself is relatively resilient. Thus, a first requirement which I have identified is for a means to enable the roll-resistance function to be applied to the vehicle body at a location closer to the centre of gravity of the vehicle than is the case in the conventional anti-roll bar system of Fig 2A.

Another limitation of the conventional arrangement is this. If the anti-roll bar is made too stiff in relation to the normal suspension springs, the movement of one wheel of the vehicle interferes adversely with the other. Furthermore, the sprung roll frequency may become too high and produce unacceptable lateral shake for the vehicle occupants over bumpy road surfaces. Also, in some vehicles the known system presents installation problems due to lack of space.

Other shortcomings of the known system of Fig 2A include the fact that it not only requires the two or more pivot mountings shown at 22, 24, but also the torque arm connections at both its ends and is thereby not readily adapted for coupling to control systems of the vehicle in order to provide (for example) an active suspension system. Nevertheless, such a system has been developed by the present applicant in which the anti-roll bar is connected to at least one of the vehicle wheels through a rotary actuator. Such a system is not readily applied to a vehicle rear axle suspension system nor is it easily integrated into an overall vehicle body roll control system which seeks to provide a means for controlling weight transfer between vehicle front and rear axles upon vehicle cornering, so as to achieve firstly a proper distribution of roll resistance between the front and rear axles of the vehicle and secondly so as to obtain optimum vehicle cornering balance.

In this connection, relevant factors which have to be considered by vehicle designers in relation to vehicle body roll include tyre loading under conditions of roll and the effect of the inherent tendency to vary tyre loading during cornering, due to the effect of the vehicle body to tend to roll on its resilient suspension.

I have identified a need to provide a vehicle anti-roll system which is capable of operating to maintain the vehicle body generally horizontal during cornering, and to exert this effect at a location other than the conventional mounting locations (pivot mountings 22 and 24 in Fig 2A) at which conventional anti-roll bar systems are connected to the vehicle body. If the effect could be achieved that the vehicle body were held by an anti-roll control structure which connects between the front and rear axles and the region of the centre of mass of the vehicle, so that the requirement for stiffness in the vehicle body was thereby reduced, while that body was itself resiliently yet positively held against rolling, a significant advance would have been achieved. If, in addition to this, the effect could be achieved that active intervention in the characteristics of the anti-roll suspension system could be provided whereby the torque in the resilient roll-resisting element were automatically increased as vehicle tendency-to-roll commenced, the result could be achieved that vehicle zero-roll cornering might well be achievable.

Likewise, if simultaneously balance between the degree of anti-roll resistance provided for the front and rear axle regions of the vehicle were chosen so that the tyres of the front and rear axles were given their optimum downward loadings for maximum road adhesion, a further step forward would have been made.

An object of the present invention is to provide a vehicle incorporating a vehicle body suspension system having anti-roll characteristics in which one or more of the requirements discussed above is provided more effectively than by the previously known systems, and/or one or more other improvements or improvements generally are provided.

According to the invention there is provided a vehicle as defined in claim 1 of the accompanying claims.

In an embodiment of the invention described below a vehicle comprises anti-roll means having a torque-resistant element connected at a first location to one pair of ground wheels of the vehicle so as to transmit torque from said vehicle body to that pair of wheels in use. In the embodiment, the method of connection to the wheel pair is by means of a right-angle integral end portion of the torque-resistant element which is coupled to a beam axle of the vehicle through rubber bushes and a swinging link as shown in Fig 2. In this way the torque-resistant element is conveniently able to apply torque generated as a result of vehicle cornering, for example to the beam axle linking the relevant pair of wheels. It is not necessary to provide a beam axle for the purpose. It is sufficient to provide any suitable structure connected to a pair of vehicle wheels and able to resist torque generated as a result of vehicles turning or cornering or other related action.

Also in the embodiment, the torque-resistant element extends generally in the travel direction of the vehicle and is connected to the vehicle body at a location intermediate the spaced pairs of ground support wheels so as to resist body roll at this location. By arranging matters to that the torque-resistant element extends generally in the travel direction from its relevant wheel pair, instead of transversely of the vehicle at the front end of the vehicle body, it can be conveniently arranged that the end of the torque-resistant element remote from its relevant pair of wheels is connected to the vehicle body at a location relatively close to the region of the centre of gravity of the vehicle in use. This latter location is not a precise point due to the variable factors such as passenger weight and location, the degree of filling of the fuel tank and likewise of the luggage or other weight-carrying space in the vehicle. Nevertheless, by adopting a generally central location which takes account also of the relatively large mass of the vehicle engine and gear box assembly, a much better approximation to the real requirements for avoidance of body roll is provided.

Also in the embodiments, there is provided the arrangement that front and rear wheel pairs of the vehicle each have their own torque-resistant element extending generally lengthwise of the vehicle towards its central region. Coupling means is provided to couple the torque-resistant elements to the vehicle body so that the degree of roll resistance provided thereby is determined. Such coupling is provided in the embodiments by control means such as a pivoted lever pivotally mounted so as to interconnect the ends of the torque-resistant elements or of extensions thereof. By adoption of a lever arrangement providing a chosen mechanical advantage, there can be provided a corresponding chosen ratio between the front and rear anti-roll functions in order to achieve a required ratio between the front and rear wheel loadings under the dynamic conditions encountered during use of the vehicle.

In one embodiment, a thrust device is provided which is operable to increase the torsion in the torque resistant elements whereby, in association with a sensing system on the vehicle body, there can be provided active suspension operation characteristics. In one embodiment these characteristics are obtained by transmission of the thrust through an actuating lever, whereby a single ram is able to control the operational characteristics of the front and rear anti-roll systems in proportions determined by the lever geometry.

In another embodiment, individual rams control the individual torque-resistant elements to enable direct hydraulic variation of the loads applied to each (front or rear) anti-roll system.

In a still further embodiment, the adjacent ends of the torque-resistant elements or of lever arms mounted thereon are interconnected by a short hydraulic or pneumatic ram connected to a corresponding fluid control system whereby active suspension control can be achieved.

Embodiments of the invention will now be described by way of example with reference to the accompanying drawings in which :
Fig 1 shows a perspective view of the underside of a vehicle according to the invention showing details of the suspension system including the vehicle body anti-roll system;
Fig 1A shows, diagrammatically, a front elevation view of a vehicle corresponding to that of Fig 1 but incorporating independent suspension linkages for the front wheels as opposed to the beam axle of Fig 1, together with a linkage interconnecting the wheels and the torque-resistant element;
Fig 2 shows, on a larger scale than in Fig 1, a detail of the mode of connecting a torque-resistant element of the embodiment of Fig 1 to the corresponding beam axle of the vehicle. The structure shown in Fig 2 does not correspond to that illustrated in Fig 1 but represents a practical way of achieving the necessary function;
Figs 2A and 2B show, diagrammatically, a simple comparison of an embodiment of the invention (Fig 2B) with the conventional anti-roll bar system (Fig 2A);
Fig 3 shows a second embodiment of the invention, similar to that of Fig 1, but incorporating anti-roll functions connected to both of the vehicle axles, and these functions being interconnected;
Fig 4 shows a detail of a modified mode of interconnecting the front and rear anti-roll systems of Fig 3 together with a circuit diagram of a fluid control system including associated vehicle sensors capable of providing an active suspension function;
Fig 5 shows a detail on a larger scale of the embodiment of Fig 3 illustrating the direct interconnection of the front and rear anti-roll systems;
Fig 6 shows a perspective view, similar to that of Figs 1 and 3 but on a smaller scale, of a modified embodiment incorporating front and rear anti-roll functions which are interlinked by a pivoted lever arrangement;
Fig 7 shows a modification of the system of Fig 6 in which the pivoted lever is arranged to be actuated by a single ram to produce a degree of preloading of the anti-roll systems and/or an active suspension function in association with a control system of the kind shown in Fig 4; and
Fig 8 shows a modification of the system of Fig 7 in which the front and rear anti-roll functions are controlled by individual rams.

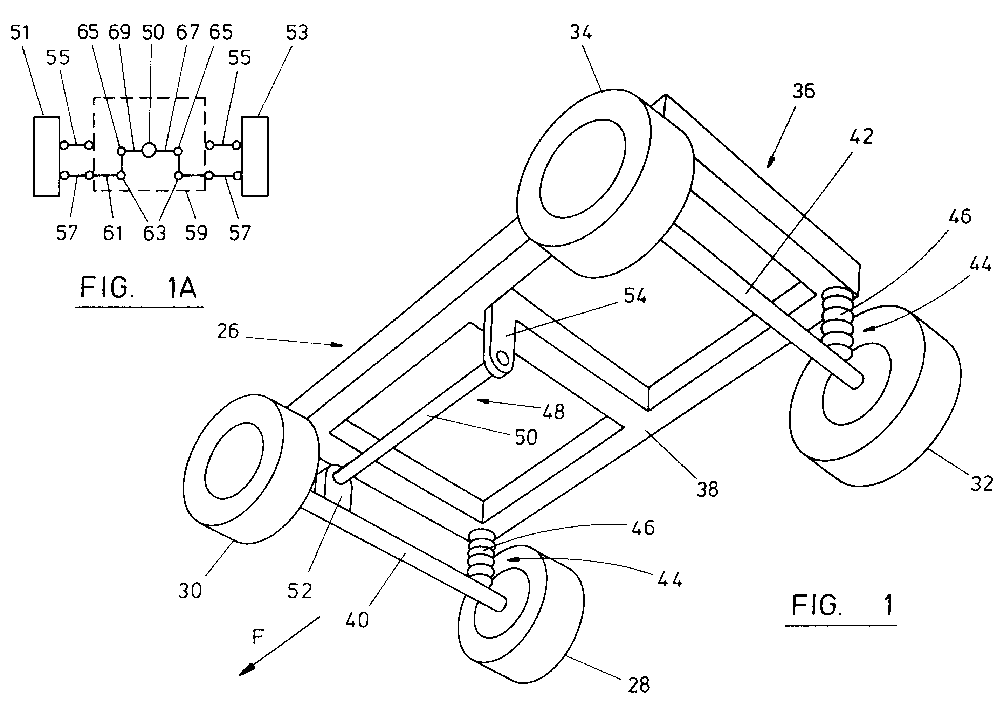

As shown in Fig 1 a vehicle 26 comprises front wheels 28, 30 and rear wheels 32, 34. A vehicle body 36 represented by a chassis 38 is mounted on wheels 28 to 34 through the wheels' associated beam axles 40, 42 and the vehicles' suspension system 44.

Suspension system 44 comprises conventional coil spring and damper units 46 provided at each of the ground wheels 28 to 32 (only two seen in Fig 1 due to the angle of view).

Suspension system 44 also comprises vehicle body anti-roll means 48, to be more fully described below.

Vehicle body anti-roll means 48 comprises a torque-resistant element 50 in the form of a steel tube connected between brackets 52, 54 mounted on beam axle 40 and chassis 38 respectively. In this embodiment, the forward bracket 52 which is mounted on front beam axle 40 serves as a simple front-end mounting for tube 50, whereas rear bracket 54 serves effectively to transmit torque to the tube from chassis 38 when the latter tends to roll relative to the wheel and axle assembly 28, 30, 40 under dynamic forces during use. Therefore, bracket 54 in this embodiment constitutes a torque-applying element in relation to the torque-resistant element or tube 50.

In this embodiment, tube 50 may be merely welded between the brackets 52 and 54 even though they execute various degrees of angular movement during use, as explained below.

In use, operation is as follows. It will be assumed that the vehicle is operating on a generally flat surface and that the brakes of the vehicle are not applied during the described operations.

When vehicle 26 is caused to steer to the right or the left by means of the front steerable wheels 28, 30 (steering system not shown for simplicity of illustration), the vehicle body 36 tends to roll in the opposite direction to the direction of steer. This movement is permitted by the coil spring and damper units 46 and is resisted by the vehicle body anti-roll means 48. Of this structure 48, the bracket 52 and tube 50 are effectively (so far as torque-resistance is concerned) solid with front axle 40. Bracket 54 is welded to tube 50 and fixed-to or integral with chassis 38 whereby body roll is transmitted directly to tube 50 and resisted by the latter's connection to front bracket 52. Tube 50 resiliently torsionally deflects in proportion. In this way, body roll is resiliently resisted and the vehicle's operating characteristics are thereby enhanced.

In the embodiment of Fig 1A there is shown a modification of the embodiment of Fig 1 in which vehicle front wheels 51,53 have independent suspension linkages comprising upper and lower wishbones 55,57 connected to vehicle body 59.

Lower wishbones 57 are extended inwardly at 61 and coupled through pivots 63,65 to the front end region of torque-resistant element or tube 50 via links 67,69.

In use, the linkage interconnecting lower wishbones 57 and wheels 51,53 serves to resist torque applied to the torque-resistant tube 50 by the vehicle body. Additionally, when one (only) of wheels 51,53 passes over a bump, some degree of additional torque is introduced into torque tube 50 by virtue of the moment of the corresponding force applied thereto through the linkage.

It will be understood that in this embodiment the end of the torque-resistant element remote from that at which the vehicle body applies torque to it is in fact not just rigidly connected to the wheels through a beam axle but is mounted so that the individual wheels can apply a degree of torque themselves direct to the torque tube.

Turning now to Fig 2, this shows a modification of the welded construction shown in Fig 1 in which tube 50 is welded to its brackets 52 and 54. Fig 2 shows the mode of connection of tube 50 (shown in Fig 2 with a somewhat reduced diameter) to beam axle 40 by means of a right-angle tube end portion 56 which extends through rubber bushes 58, 60 provided in a bracket 60 and a swing link 64, the latter itself being pivotally mounted on a second bracket 66.

In this way, tube 50 is connected to axle 40 so that it is torsionally restrained thereby to resist torsion applied to it by bracket 54. As is clearly apparent from Fig 2, tube 50 can pivot about the axis of its end portion 56 to accommodate small scale relative movements between the components arising from their geometries and the relative movements generated during use.

At the opposite end of tube 50, it may be coupled to chassis 38 by a mounting arrangement generally identical to that shown in Fig 2. Accordingly, as shown in Fig 2B, the general arrangement of the vehicle body anti-roll means 48 can be represented by the simple structure seen in Fig 2B in which reference numerals corresponding to those of Fig 2 and Fig 1 have been adopted.

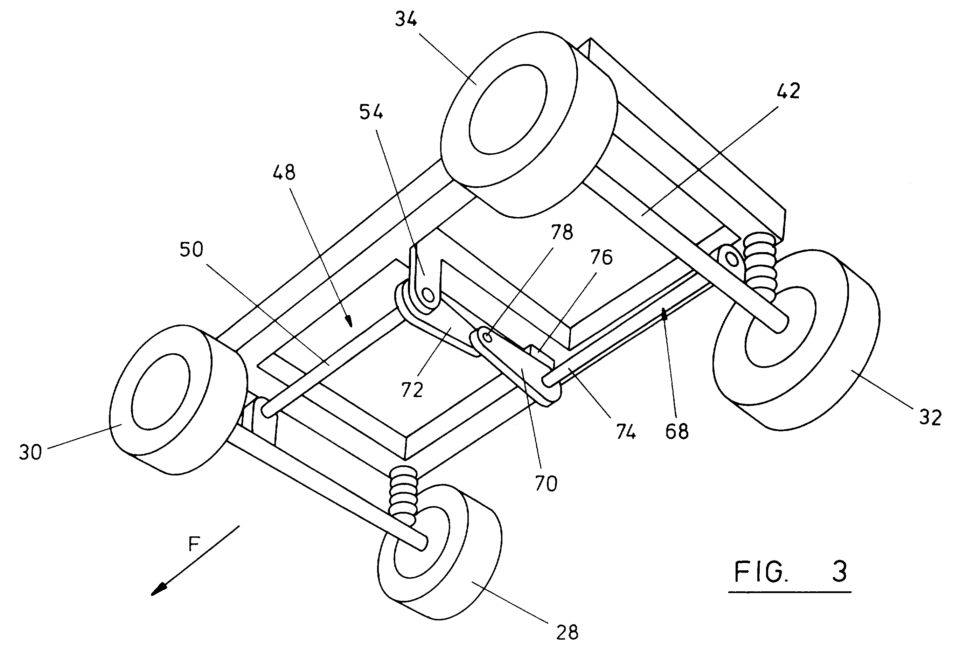

Turning now to the embodiment of Fig 3, this corresponds to that of Figs 1 and 2 in terms of the vehicle body anti-roll means 48 as connected to the front wheels 28, 30 with respect to the direction F of normal forward motion of the vehicle.

In this embodiment there is provided, additionally, further vehicle body anti-roll means 68 associated with the rear wheels 32, 34, and connected to the rear axle 42 in the same manner as tube 50 is connected to axle 40 in Fig 1, or indeed as shown in Fig 2.

The main additional difference from the embodiment of Fig 1 concerns the interconnection of the anti-roll systems 68 and 48. These are coupled by means of torque-applying elements or arms 70, 72 which serve to couple together the two anti-roll systems so that their anti-roll functions are integrated so as to achieve a degree of front-rear coordination of the anti-roll function. It can be readily seen that while the anti-roll means 48 and 68 resist torsionally rolling movement of the chassis 38 in the upwards or downwards direction at either side, nevertheless the systems permit axle movement of the kind needed to accommodate ground contours such as simultaneous upward movement of diagonally opposed wheels.

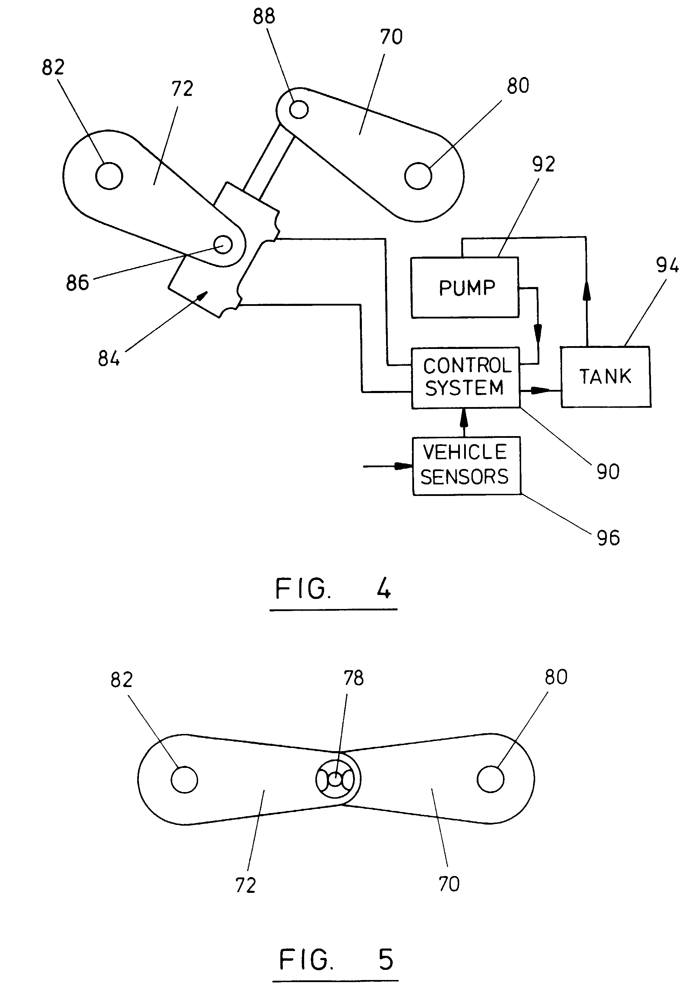

Turning to the details of the structures for interconnecting the forward torque-resistant element 50 and the corresponding rearward torque-resistant element 74, in this embodiment these are not welded to their end brackets 54 and 76 but are angularly moveable therein and have the torque-applying elements 70, 72 welded thereto and coupled together at 78. This arrangement is shown on a larger scale in Fig 5 which indicates at 80 and 82 the pivot mountings on the brackets 54 and 76.

Coupling 78 comprises a resilient element extending through aligned apertures in the torque-applying elements or links 70, 72 so as to accommodate the inherent relative angular movement of these while transmitting force therebetween.

Broadly, during operation of this embodiment, when the vehicle body moves relative to the wheels so that either front or rear wheel pairs rise or fall relative to the body in unison, no torque is generated in the torque-resistant elements and no roll-resistance arises. However, when body roll towards one side of the vehicle occurs a torque is induced in the torque-resistant elements. Where there is relative movement of a single wheel relative to the body its torque-resistant element is actuated but to a lesser extent than would have been produced if both wheels on that side of the vehicle had moved together. Where diagonally-opposed wheels move relative to the vehicle body, such movement is not resisted by the torque-resistant elements.

In the embodiment of Fig 4, coupling 78 is replaced by a short hydraulic ram 84 interconnecting pivots 86, 88 on the elements 70, 72.

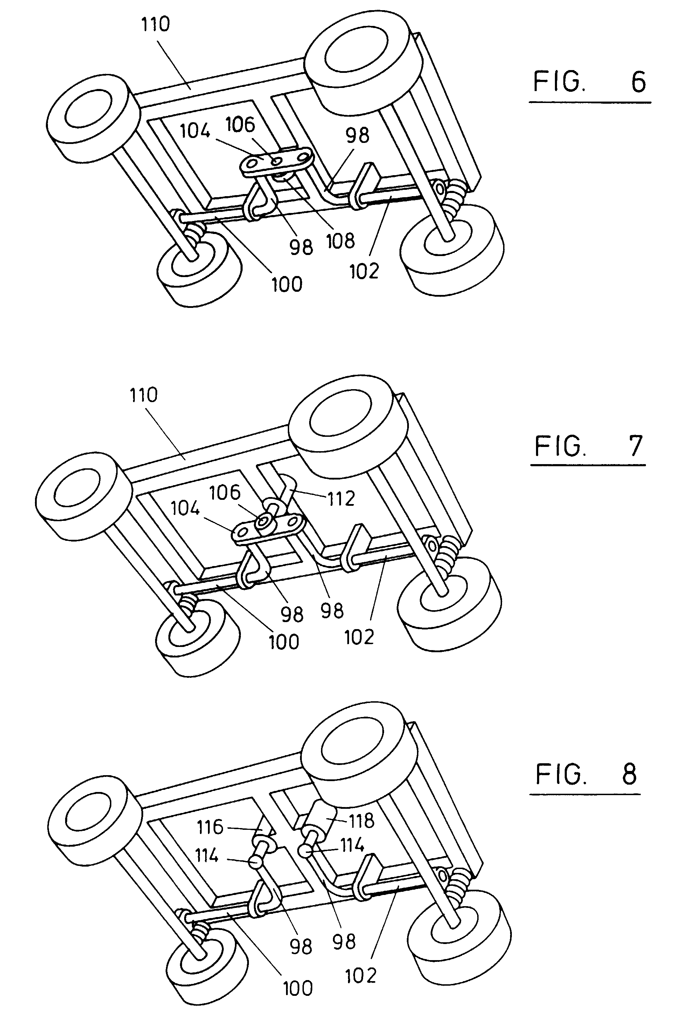

To operate ram 84 there is provided a hydraulic control system 90 providing valve control of the output of a driven pump 92 drawing fluid from a tank 94 and the output of control system 90 being dependent on signals from vehicle sensors 96 which detect vehicle body movements likely to produce body roll and signal ram 84 to extend to increase the torsion within the anti-roll system. The same or a similar control system and associated components can be used in relation to the embodiments of Figs 7 and 8.

Turning now to the embodiments of Figs 6, 7 and 8, these show modifications of the system for integrating the anti-roll functions of the front and rear suspensions in order to achieve a chosen compromise between the various at least partially conflicting factors relating to the operation of a vehicle under the dynamic conditions of vehicle cornering, as discussed earlier in the text of this application.

In all three embodiments of Figs 6, 7 and 8 the general construction is substantially as described above in relation to Fig 3 but in these embodiments the end portions 98 of the torque-resistant elements 100, 102 are formed as an integral right-angled extension thereof. These end portions 98 constitute the torque-applying elements in these embodiments and thus, in this respect, correspond to the corresponding constructions in the preceding embodiments, namely items 70 and 72 in Figs 3 and 5 and bracket 54 in Fig 1.

In the embodiments of Figs 6 and 7, the end portions 98 are pivoted in the ends of a loading and proportioning lever 104 which is pivoted at 106. In Fig 6, lever 104 is pivoted on a bracket 108 fixed to chassis 110. In Fig 7 the connection to chassis 110 is through a thrust device in the form of an actuator constituted by a fluid ram 112 which is connected to a system as described above in relation to Fig 4 and including control system 90, pump 92, tank 94 and vehicle sensors 96.

It will be understood that the mechanical advantage offered by lever 104 in relation to the relative lengths of the moment arms provided by the lever in connecting to the end portions 98 of the torque resisting elements 102, will determine the proportions of the front and rear anti-roll effects exerted on the vehicle body. For any particular vehicular case, the proportions can be chosen to suit the vehicle weight distribution and the characteristics of its tyre equipment.

In the embodiment of Fig 8, the end portions 98 of the torque resistant elements 100, 102 are connected through ball joints 114 to individual control rams 116, 118 which are likewise each connected to its own pressure control system 90 to 96 in order that the front/rear proportionality control can be effected in a more sophisticated and variable manner.

Amongst modifications which could be made in the above embodiments while remaining within the scope of the invention are the following :
1 Considerable variation in the structure of the torque-resistant elements themselves is envisaged. In the embodiments, they are in the form of tubes, but any suitable mechanical structure can be employed provided it has the required characteristics concerning resilient torsional resistance to the applied torques;
2 Likewise the torque-applying elements can be either integral with the torque-resistant elements or secured thereto by welding or other coupling means. It is not essential that the connection be exactly at right angles provided the torque is conveniently applied and of course any physical form for the torque-applying elements may be adopted to suit particular circumstances;
3 The mode of coupling the torque-resistant and torque-applying elements to the axle assemblies and to the vehicle body may be modified with respect to that shown in the drawings, which are merely examples of simple mechanical systems for the purpose;
4 The anti-roll system disclosed herein is applicable generally to vehicles having any other chosen form of suspension system for resiliently supporting vehicle body on its road wheels;
5 The embodiments of the invention have been shown applied to vehicles having beam-type axles, and this is convenient for the application of the relevant forces but other structures extending between the wheels could be adopted if convenient for a particular use, and it would be sufficient, for example, if the torque-resistant element were connected to any convenient structure provided between a pair of vehicle wheels and capable of resisting the torque generated by the vehicle body as a result of turning or cornering or related actions. An example of such a different mounting for the torque-resisting end of the torque-resistant element is shown in Fig 1A in which the element is adapted to receive torque at both ends.
6 It is envisaged that the torque-resistant element of the embodiments described above could perform an additional function in acting as a location member for an axle in relation to the chassis. Thus, the torque-resistant element would then become part of the suspension linkage of one of the vehicle's wheels, front or rear.

The above first aspect of the invention provides improved means and systems for incorporating anti-roll systems into automotive vehicles by modifying the mechanical structures and connection systems for coupling torsion bars between road wheels and vehicle bodies. In this second aspect of the invention we now look at systems for providing means whereby anti-roll functions may likewise be incorporated more readily and economically and effectively into both existing automotive vehicles on a retro-fit basis, and into new automotive vehicles on an original equipment basis.

An aspect of the current marketplace conditions in relation to automotive vehicle body pitch and roll control systems is that although of course all such vehicles provide a resilient suspension system offering a degree of control over body movements relative to vehicle wheels, in Europe at least there is as yet negligible movement towards the introduction of active roll and pitch control systems on an original equipment production-line basis, except from the French manufacturer Citroen. Moreover the Citroen vehicle suspension problem is based upon hydro-pneumatic principles. The active suspension used in the Citroen Xantia Activa while having the advantage of providing active intervention in vehicle cornering to control vehicle body movement, suffers from the disadvantage of altering the stiffness of the anti-roll bars and dampers, whereby ride quality is compromised.

I have identified a need to provide an automotive vehicle active suspension system which is more readily adaptable to the requirements of vehicle design in terms of its ability to be retro-fitted as well as offering the cost-effectiveness needed for use on an original equipment basis.

With regard to retro-fitting an active suspension system on existing vehicles, there is a need for a new approach to the design of such systems whereby they facilitate retro-fitting. Thus, for example, it is desirable that such a system does not require significant intervention in or modification of the hardware systems of vehicle suspension, including its connection to the vehicle body. For example it is plainly preferable for the active suspension system not to require the mounting of suspension components of appreciable size which are additional to existing suspension components. Accordingly, systems such as those of my earlier active suspension apparatus in which a pair of hydraulic motors generate additional torque in a vehicle's anti-roll bar in response to sensed vehicle cornering motion, are not as readily incorporated into an existing vehicle as the systems of the present invention in which it is possible to replace an existing component by a similarly-sized component and thus avoid the need to create space in a portion of the vehicle (such as its wheel/body suspension region), in which space is often at a premium. I have discovered that it is entirely feasible to substitute for the generally strut-like-format telescopic shock absorber unit of many automotive conventional non-active suspension systems, a similarly strut-like hydraulic actuator or ram which imposes negligible or zero additional space requirements and can be readily connected to its own hydraulic control systems which offer not only the previously-provided damping function but also the active suspension control functions which are the prime objective of the additional functionality of the system.

In the embodiments described below the hydraulic actuators or rams of the wheel suspension systems can be mounted as direct replacements for conventional automotive telescopic shock absorbers while themselves providing hydraulic damping and the hydraulic control systems are readily located in the engine bay of the vehicle without any space difficulty whatever.

A further aspect of the invention relates to cost and complication. Previously proposed active suspension systems include, for example, the one originating from Automotive Products which, despite its technical and commercial availability in a format and state of development allowing immediate production, has not (as already indicated above) found favour with volume vehicle production corporations, apparently for the following reasons. The AP system is based upon the sensing of vehicle wheel positions relative to the vehicle body or chassis. Signals derived from this sensed parameter are used to control the active suspension system. As a result of the inevitable high frequency movements of the vehicle wheels in use relative to the chassis or body there is a need to introduce damping in the sensing system, and this is provide by a pendulous mass interposed between the spool-type control valve and the operating linkage connected to the wheel. Such an arrangement is inherently complex and therefore costly. Moreover, obviously there is a need to sense wheel movements at both sides of the vehicle and likewise both at the front and the rear. A minimum of three such damped valve and operating linkage assemblies are needed per vehicle and such valves are inherently relatively costly. There is a need for a different approach to the derivation of the relevant control signal in order that these complexities and cost penalties are avoided. I have discovered that a cost-effective approach to the generation of a suitable control signal for regulating the operation of an automotive active suspension system can be obtained from an acceleration sensor providing an output signal proportional to sensed vehicle acceleration, whether negative or positive and whether in the travel direction or laterally thereof.

By the use of such a signal there can be conveniently and cost-effectively provided a fluid-hydraulic or pneumatic control system which will produce in accordance with an input signal relating to vehicle acceleration, an output of control fluid which is capable of operating two or more actuators which provide the passive suspension vehicle active suspension action and which may themselves provide also the function, or a part thereof. In the embodiments described below the hydraulic actuators are provided in addition to coil spring suspension units. However, this is a matter of design convenience and the hydraulic or pneumatic actuators which provide the active suspension function need not be of sufficient size to support the entire vehicle weight unless that is wished. It is sufficient that they be capable of generating the requisite offsetting thrust to counteract the dynamic pitch and/or roll forces generated by the vehicle during use.

As a practical matter, the accelerometers and control valves which form the core of the embodiments of the active suspension system as described below are available in the UK as off-the-shelf items from the well-known International companies Lucas of Birmingham, UK and Electrocomponents-Radio Spares of Peterborough, UK.

A further aspect of the invention relates to the mode or operation of the control system for energising or actuating the active suspension so that it responds appropriately when the vehicle body is subjected to acceleration forces likely to produce pitch or roll relative to its wheels.

There is a need for the provision of a simple and effective system whereby the suspension responds in a direct and readily controllable manner upon detecting conditions requiring its operation.

As mentioned above, prior systems have, for example, detected wheel movement and after removing certain elements of this by means of mass-based damping effects has produced a fluid flow which is intended to cause the requisite offset to vehicle body lateral acceleration.

In the embodiments described below, acceleration is sensed and the resultant acceleration signal is fed to an electronic control unit which generates a target position for an associated hydraulic fluid displacer unit, which causes an associated defined volume of hydraulic fluid to be displaced in relation to the associated actuator or ram. In other words, a sensed acceleration (positive or negative, longitudinal or lateral) is translated into an associated volume of fluid which is displaced towards or away from the associated actuator or ram. In this way, with the associated function of a proportioning valve whereby the dynamics of the fluid movement are tailored to the amount of the accrued outstanding hydraulic flow balance at any given instant, the system behaves as follows. A sensed acceleration translates into a predetermined volume of fluid displaced towards or away from the relevant actuators. In other words, a given value of acceleration translates into a corresponding pre-determined amplitude of vehicle body movement (in an offsetting direction) added to that which would have occurred in the absence of the active suspension system.

A still further aspect of the invention relates to the hydraulic circuit interconnecting the fluid-pressure actuators of the active suspension system whereby the system is provided with certain inherent operating characteristics which serve to supplement and accentuate the desirable operating characteristics of the active suspension system by providing a degree of passive functionality to complement the active functions.

Thus, for example, by the provision of double-acting fluid pressure cylinders and associated pistons/piston rods there can be conveniently provided a degree of inherent or passive resilient stiffness or resistance to vehicle roll in combination with a requisite level of suspension softness or compliance to so-called bounce. In short, the passive operating characteristics of the actuators can be arranged to offer at least an approximation to the suspension softness (to bounce) associated with luxury vehicles, in combination with a desirable degree of resistance to roll. These functions derive from the headside/rodside fluid pressure interconnections of the headside/rodside chambers of the actuators. In short, the volume differential arising from the piston rod itself in the rodside chambers which arises when the headside chambers are connected to rodside chambers can be readily arranged to provide a chosen level of suspension resilience or stiffness. The resilience is provided by hydraulic accumulators connected to the rodside chambers and located either on top of them or elsewhere.

By arranging for the fluid interconnections of the actuators to produce in accordance with these principles, a relatively high degree of resistance to simultaneous compression of the actuators in pairs on one side of the vehicle and extension on the other (as occurs in roll conditions), there is provided roll resistance while individual actuator compression (one at a time) is resisted less, whereby general suspension softness is enhanced.

In this specification and in the claims, except where the context explicitly requires otherwise, references to actuators usually refer to hydraulic actuators since the principles of the active suspension invention are most readily applicable to hydraulic-pressure operated systems in combination with gas accumulators which provide resilience and have particular operating characteristics which are beneficial in terms of their non-linear compression rates and their ability to absorb kinetic energy and to offer related dynamic advantages of relevance for vehicle levelling.

There is disclosed in US-A-5,447,332 (Assigned to Kinetic Limited) a vehicle suspension system for controlling movement of vehicle wheels relative to the movement of the vehicle body when turning and traversing uneven surfaces. The vehicle has a load support body (column 2 line 31) and the system is evidently intended for use "off normal roadways" (column 3, line 58) and the system aims to provide suspension mechanisms whereby "all wheels can freely follow even extremely uneven terrain" (column 4, line 17). At column 5 and line 48 it is made clear that the suspension is typically fitted to normally slow moving vehicles such as cranes. The system of US '332 has the object of eliminating the use of conventional spring components without the need for controlled external energy input during operation (column 2, line 25), and provides diagonally-interconnected wheel rams together with means to substantially equalise the pressure in the hydraulic circuits to minimise lateral roll movement and longitudinal pitch movement. As stated at column 8, line 38, when the vehicle is in its normal passive use situation the chambers of the wheel rams are interconnected to each other and isolated from the pump 78 and reservoir 77 (column 8, line 48). However, the pump may be connected to the cylinders to level the vehicle for example when a static load is added to it or removed from it (column 8, line 49). Vehicle roll control is provided by means of pressure equalisation rather than sensing vehicle motion and responding thereto by means of a power input from the vehicle's engine-driven hydraulic system.

I have discovered that double-acting hydraulic actuators have a particular merit in relation to active suspension systems when connected together in pairs with the headside and rodside interconnected so that when compressed the headside chamber on one actuator discharges into the rodside chamber of the other. If both us-connected actuators are being compressed the headside chambers are decreasing in volume simultaneously with the corresponding increasing in volume of the rodside chambers, but the latter include the two piston rods, therefore there is a net decrease in volume of these two chambers corresponding to the stroke of the compression movement and the cross-sectional area of the piston rods. This volume of fluid enters the connected hydro-pneumatic accumulators compressing the gas therein (resiliently).

But, when one cylinder is compressed, and the other is extended the headside chamber volume of fluid from the compressed ram still has to enter the rodside chamber of the other which is in this case decreasing in volume and therefore the volume of hydraulic fluid which has to enter the accumulators comprises the sum of the headside and rodside piston areas multiplied by the stroke and is thus proportional to twice the piston annulus area. Therefore, because the piston annulus is usually much larger in cross-sectional area than the piston rod, the resilient resistance to opposite sense movement of the pistons is very much higher than to same sense movement.

This characteristic can be utilised by arranging that the pairs of interconnected actuators are disposed with respect to the vehicle laterally and longitudinally so as to be moved in opposite senses under roll (the rams of each pair on opposite sides of the vehicle) and under pitch (the rams of each pair at opposite front/rear ends of the vehicle). A diagonal disposition of actuators can achieve both effects.

In relation to active suspension this effect enables the characteristics of the vehicle's suspension for roll and pitch and bounce to be readily chosen by an appropriate selection of the parameters of piston rod area and piston annulus area and pumped hydraulic offset. By increasing the piston annulus to piston rod area a higher passive resistance to roll and pitch can be achieved at the expense of a higher passive resistance to individual wheel movement (due to larger pistons) ie the suspension generally becomes stiffer and the ride is less comfortable. However, by choosing the level of pump hydraulic offset appropriately it can be arranged firstly that the ratio of piston rod to piston annulus area allows good ride comfort at times when the vehicle is not subject to pitch or roll (and the active suspension is inactive), and indeed when it is active. Secondly, the hydraulic offset can be arranged to be such that there is simultaneously provided zero or negligible (or whatever level is wished) of pitch and/or roll resistance. This is because even though the piston annulus/rod ratio may have been reduced to give a soft comfortable ride (by having large/thick piston rods relative to the piston annuli) the vehicle roll or pitch can still be zeroed (if wished) by providing sufficient hydraulic feedback or offset to ensure the requisite level of roll and/or pitch resistance. It can be considered (as a mere mental device) that the active suspension actually pumps or jacks the vehicle back from where it has rolled or pitched-to by virtue of its own "passive" suspension characteristics. In fact, in the embodiments, the vehicle need never roll at all so it actually never needs to be pumped back because its acceleration sensor senses pitch and/or roll before it occurs and predicts the level of hydraulic offset needed.

Thus, the embodiments enable the provision of an active suspension providing controlled reduction or elimination of roll and/or pitch in combination with a passive suspension providing a controlled degree of passive suspension softness.

An object of the present invention is to provide a vehicle suspension control system offering improvements during one or more of the matters discussed above, or generally.

According to the invention there is provided a vehicle suspension system as defined in the accompanying claims.

Embodiments of this aspect of the invention will now be described by way of example with reference to the accompanying drawings in which:

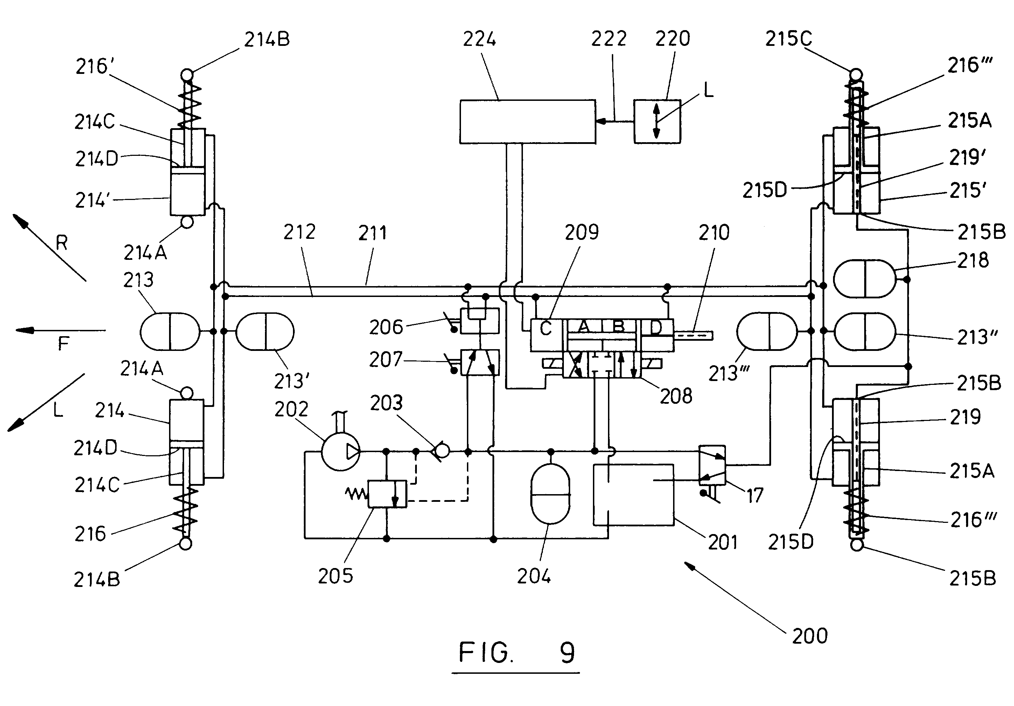

Fig 9 shows a circuit diagram for an active suspension system for an automotive highway vehicle; and

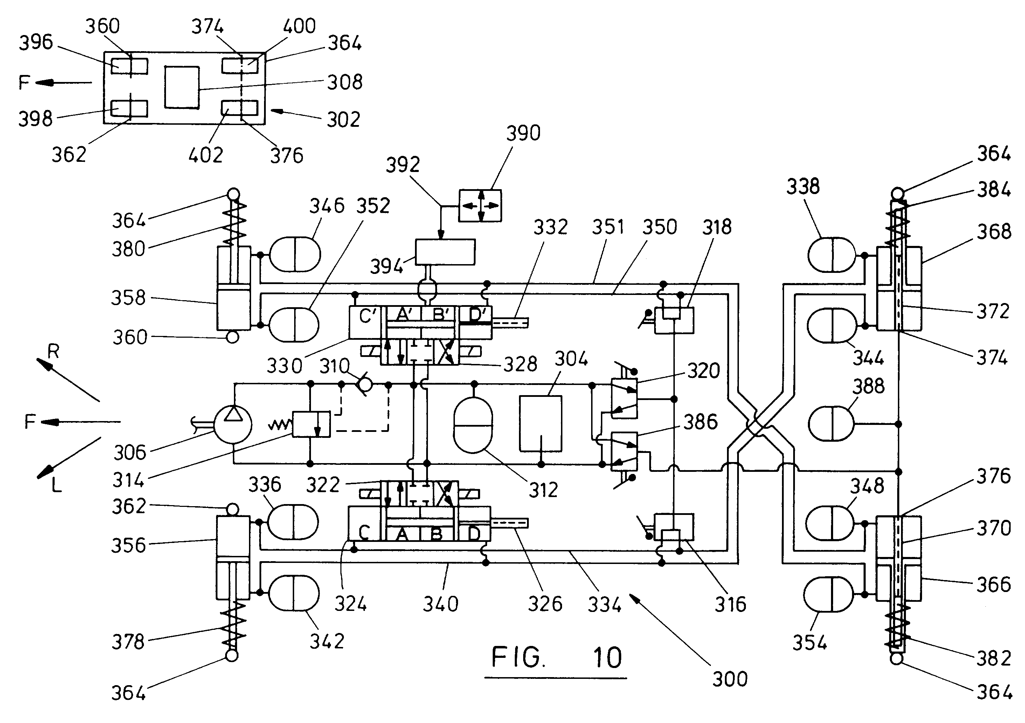

Fig 10 shows a corresponding circuit diagram for a further embodiment of an active suspension system for an automotive highway vehicle.

As shown in Fig 9, an active suspension system 200 for an automotive highway vehicle (not shown) comprises a hydraulic reservoir 201, a pump 202 driven by the engine (not shown) of the vehicle, a non-return check valve 203, a gas-charged pressure accumulator 204, a pump unloading valve 205, a pressure-equalising valve 206, a height correction valve 207, a three-position four-way electronically controlled proportional valve 208, and an hydraulic displacer unit 209 incorporating a position transducer 210. Hydraulic lines 211 and 212 connect gas springs 213 and 213' and 213'' and 213''' with the displacer unit 209.

Double-acting hydraulic cylinders or actuators 214 and 214' are mechanically connected between the front wheel axles at 214A and the vehicle chassis at 214B. Double-acting hydraulic cylinders or actuators 215 and 215' incorporate additional hydraulic rams 219 and 219' within the piston rods 215A of hydraulic cylinders 215 and 215' for vehicle rear height control. Cylinders 215 and 215' are connected between the rear wheel axles at 215B of the vehicle and the chassis thereof at 215C.

Coil springs 216 and 216' and 216'' and 216''' support the main weight of the vehicle on the axles thereof.

A height corrector valve 217 provides for selective manual control of the pressure in a gas spring 218 to enable variation of the in-use static height of the rear end of the vehicle for loading-unloading purposes.

An accelerometer 220 adapted to sense acceleration in the lateral direction L with respect to the direction F of normal forward motion of the vehicle feeds an acceleration signal at 222 to an electronic control unit 224 connected to hydraulic displacer unit 209 and position transducer 210 and proportional valve 208.

In use, the system operates as follow.

Assuming there is no residual pressure in the system, on starting the engine, pump 222 will draw fluid from the reservoir 201 and deliver it under raised pressure to accumulator 204 via non-return valve 203.

If the vehicle is lower than its normal ride height, due to lack of pressure in gas springs 213, 213', 213'', 213''' and 218, height correction valves 207 and 217 will detect this and open accordingly to allow pressurised fluid to flow into springs 213, 213', 213'', 213'''and 218 thus raising the vehicle by means of fluid pressure acting on the areas of the piston rods of cylinders 214, 214' and 215 and 215' together with the areas of rams 219 and 219'.

Valves 217 and 217' are suspension levelling valves having a damped action which is non-responsive to rapid dynamic height changes during use and provides the required slow response for overall body height setting. These valves close when their respective ends of the vehicle are at the correct predetermined height. If the vehicle is too high at one end or the other, the appropriate valve will open allowing fluid to return to the reservoir 210 thus lowering the vehicle body.

Pressure-equalising valve 206 is arranged to couple lines 211 and 212 together when displacer 209 is in its central position. In all other conditions of the displacer, valve 206 isolates line 211 from line 212.

Unloading valve 205 is preset to open when the pressure in accumulator 204 reaches a preset value at which fluid is then bypassed back to reservoir 201 at a low pressure. Non-return valve 203 prevents pressurised fluid in accumulator 204 passing back through valve 205.

When accelerometer 220 detects no lateral acceleration by the vehicle (normal straight line vehicle movement with the vehicle under passive suspension control ) and with suspension compliance (softness) determined by the ratio of the cross-sectional areas of piston rods 215A and 214C to the corresponding piston annulus areas 215D and 214D, proportional valve 208 remains closed. However, when the vehicle negotiates a curve, accelerometer 220 senses lateral acceleration and sends a proportional signal to electronic control unit 224 which generates a target position for the piston 220 of displacer unit 209. This target position is effectively an acceleration-based estimate of the extent of vehicle body movement in the absence of the active (roll controlled) suspension. When the vehicle is cornering to the right (direction R in Fig 9 with respect to forward direction F) cylinders 214 and 215 on the opposite side of the vehicle tend to be compressed by the vehicle body and cylinders 214' and 215' tend to be extended likewise due to vehicle body lateral weight transfer.

The signal from accelerometer 220 causes control unit 224 to actuate displacer unit 229 to cause valve 208 to open admitting high pressure fluid into chamber B thereof so that the displacer piston 210 moves to the right as seen in Fig 9, displacing fluid into line 211 from chamber D and compressing gas springs (accumulators) 213 and 213'', thus raising the pressure on the top of (headside chambers) the pistons in cylinders 214 and 215 causing an extension force (on the left side of the vehicle). The same action of displacer piston 210 causes an increase in fluid pressure on the underside of the pistons 214' and 215' (at the right side of the vehicle) causing a retraction force. Simultaneously, fluid is withdrawn from line 212 into chamber C of displacer unit 209, thus lowering the pressure in gas springs 213' and 213''', and lowering the pressure also on the tops (headside chambers) of the pistons in cylinders 214' and 215', thereby causing a net retraction force. The same effect is also caused on the underside of the pistons in cylinders 214 and 215 causing a net extension force.

Position transducer 210 detects when the displacer unit piston reaches the target position generated by electronic control unit 224 in response to the input from accelerometer 220, and switches proportional valve 218 off. Thus, at this point the hydraulic system has injected into the actuators or rams which tend to be compressed, a volume of fluid corresponding to the estimated vehicle body movement, (based on acceleration) whereby the body can be considered as effectively hydraulically "jacked up" even though the body never tilts because the suspension reacts before this can occur.

When the vehicle comes out of the corner, lateral acceleration reduces to zero and the piston of displacer unit 209 returns to its central position, thereby restoring equilibrium in gas springs 213, 213' and 213'' and 213'''. The volume of fluid displaced is arranged to be in such a proportion to the lateral acceleration as will achieve the desired level of roll correction.

Roll correction for the vehicle when cornering to the left is achieved in a similar manner to that described above but with the displacer unit piston moving in the opposite sense, that is to say by displacing fluid into line 212 from chamber C of the device, and out of line 211 into chamber D.

Turning now to the embodiment of Fig 10, this corresponds to that of Fig 9 but provides for diagonal instead of lateral interconnection of the actuator pairs to provide pitch as well as roll control. An active suspension system 300 for an automotive highway vehicle 302 comprises a reservoirs 304, a pump 306 driven by the engine 308 of vehicle 302, a non-return check valve 310, a gas charged pressure accumulator 312, a pump unloading valve 314, pressure equalising valves 316 and 318, and a height correction valve 320. A three-position four-way electronically controlled proportional valve 322 is associated with a first displacer unit 324, which incorporates a position transducer 326, and with a second three-position four-way electronically controlled proportional valve 328 which is associated with a second displacer unit 330 which incorporates a position transducer 332.

A hydraulic line 334 connects gas springs 336 and 338 with displacer unit 324. A hydraulic line 340, connects gas springs 342, 344 with displacer unit 324. Hydraulic line 340 connects gas springs 342, 344 also, with displacement 324. Hydraulic line 350 connects gas springs 352, 354 with displacer unit 330.

Double-acting hydraulic cylinders or actuators 356 and 358 connect between the front wheel axles at 360, 362 and the vehicle body or chassis at 364.

Double acting cylinders 366, or actuators 368 incorporating hydraulic rams 370 and 372 are connected between the rear wheel axles 374, 376 and the vehicle chassis or body 364. Coil springs 378, 380, 382 and 384 are mounted on the wheel cylinders to support a major proportion of the weight of the vehicle.

An additional height correction valve 386 controls the pressure in gas spring 388.

As in the preceding embodiment an accelerometer 390 sensing lateral acceleration but in this embodiment also longitudinal acceleration for pitch control is connected at 392 to an electronic control unit 394 which produces valve control signals on the basis of acceleration signals from the accelerometer.

In use, the system of Fig 10 operates as follows.

Assuming there is no residual pressure in the system 300, on starting engine 308, pump 306 draws fluid from reservoir 304 and delivers it under raised pressure to accumulator 312 via check valve 310.

If vehicle 302 is below its normal ride height, due to lack of pressure in gas springs 336, 338 and 342 to 348 and 352, 354 and 388, then height correction valves 320 and 386 will detect and open accordingly to allow pressurised fluid to flow into the springs as required, thus raising the vehicle by raising the fluid pressure over the areas of the piston rods of cylinders 356, 358 and 366, 368 together with the area of rams 370, 372.

Height correction valve 320 is arranged to be sensitive to the average height of a vehicle over the front wheels 356, 358. Height correction valve 386 is arranged to be sensitive to the average height of the vehicle 302 over the rear wheels 400, 402. Valves 320 and 386 will close when their respective ends of the vehicles are at the correct predetermined height. If at any time the vehicle is too high at one or other end, the appropriate height correction valve opens allowing fluid to return to reservoir 304, thus lowering the vehicle.

Pressure equalising valve 316 is arranged to couple lines 334 and 340 together when displacer unit 324 is in its central position. Pressure equalising valve 318 is arranged to couple lines 351 and 350 together when displacer 330 is in its central position. In all other conditions, lines 334, 340, 350 and 351 are isolated from each other.

Pump unloading valve 314 is preset to open when the pressure in accumulator 312 reaches a certain value. Fluid is then bypassed back to reservoir 304 at a low pressure. Pressurised fluid in accumulator 312 can not pass back through pump unloading valve 314 due to the presence of check valve 310.

When no acceleration or deceleration of the vehicle is occurring and thus is not sensed by accelerometer 390, proportional valves 322 and 328 remain closed. The vehicle is in its passive suspension mode and the actuators provide a cushion suspension with a level of cushioning dependant on the ratio of the areas of the piston rods to the piston annuli as in the last embodiment. However, when the vehicle negotiates a curve, accelerometer 390 detects the lateral acceleration and produces a proportionate signal to electronic control unit 394 which generates a target position for the pistons in displacer units 324 and 330. For example, when the vehicle corners to the right (R) the double acting hydraulic cylinders 356 and 366 tend to be compressed and cylinders 358 and 368 to be extended due to lateral weight transfer of the vehicle body 364. As a result of the sensed acceleration, proportional valve 322 is caused to open admitting high pressure fluid into chamber A and the displacer unit piston moves to the left displacing fluid from chamber C into line 334 thereby compressing gas springs 336 and 338 and thus raising the pressure on the top (headside) of the piston in cylinder 356 and thus causing an extension force and likewise on the lower side of the piston in cylinder 368, thereby causing a retraction force. Simultaneously, fluid is withdrawn from line 340 into chamber D, thus lowering the pressure in gas springs 342 and 344 and on the top (headside) of the piston in cylinder 368 thereby causing a net retraction force, and likewise on the underneath of the piston in cylinder 356 causing a net extension force. As in the previous embodiment, lateral roll is offset before it occurs and in this case fore-aft pitch is likewise resisted due to the diagonal actuator dispositions.

Position transducer 326 detects when the displacer unit piston reaches its target position generated by target control unit 394 in response to the lateral acceleration input and switches proportional valve 322 off.

In the same way the sensed lateral acceleration signal from electronic control unit 390 also generates a target position for the piston in displacer unit 330 and in a like manner an extension force is generated in cylinder 366 and a retraction force in cylinder 358.

When vehicle 302 comes out of the corner manoeuvre, lateral acceleration returns to zero and both displacer unit pistons return to their central positions, thereby restoring equilibrium in the gas springs.

It will be noted that the volumes of fluid displaced by both displacer units is arranged so as to be in proportion to the acceleration, and thereby to produce the requisite roll correction effect. This direct relationship arises from the direct line of control from accelerometer 390 through electronic control unit 394 and thus to the displacer units 324 and 330, which produces piston movement corresponding to the target piston positions generated by the electronic control unit, and thus likewise produce defined volumes of hydraulic fluid movement corresponding accordingly to the sensed acceleration.

Roll correction for the vehicle when cornering to the left is achieved in a like manner with the displacers moving in the opposite sense.

Because accelerometer 390 is arranged to sense longitudinal acceleration as well as lateral acceleration and the hydraulic actuators are interconnected diagonally as well as headside-to-rodside, the suspension system 300 can be readily arranged to provide active pitch control as well as or instead of roll control. A combination of lateral and longitudinal acceleration signals are in this case received by the electronic control unit 394 which generates a target position for the displacer units providing appropriate loading on each wheel according to the balance required to produce safe and responsive handling in the driving conditions obtaining. Various handling balances may be programmed into the electronic control unit.

## Claims

1. An active suspension system for an automotive highway vehicle comprising:
a) at least two individual suspension units for at least one pair of laterally or longitudinally-spaced highway-engagable wheels of said vehicle and said suspension units being adapted to act between said wheels and the vehicle body to apply thrust therebetween to offset pitch and/or roll forces generated by the vehicle body during use, and to provide resilient suspension characteristics during passive suspension usage;
b) said suspension units comprising double-acting hydraulic piston and cylinder assemblies providing actuators adapted to extend and retract in a lengthwise manner and to generate said thrust on being pressurised;
c) a fluid pressure supply and control system for said actuators comprising a driveable pump, an accelerometer mountable on said vehicle to sense longitudinal and/or lateral acceleration and to generate control signals in proportion to said acceleration, and fluid control means connectable to said accelerometer and to said pump to deliver a controlled supply of fluid pressure from said pump in proportion to said control signals from said accelerometer;
d) said fluid control means being adapted to accept or deliver a volume of fluid for operation of said actuators in proportion to said acceleration signals from said accelerometer whereby extension or retraction of said actuators in response to sensed vehicle body acceleration in directions to produce body roll and/or pitch produces a corresponding amplitude of extension and/or retraction of said actuators;
e) hydraulic accumulators connected to said double-acting piston and cylinder assemblies and adapted resiliently to accommodate inflow and outflow of hydraulic fluid in accordance with pressure changes in the hydraulic system;
f) and said double-acting hydraulic piston and cylinder assemblies being hydraulically interconnected between the headside and rodside chambers thereof so that upon simultaneous compression of both piston and cylinder assemblies a smaller net balance of hydraulic fluid has to be accommodated by the accumulators than upon compression of one cylinder assembly and extension of the other; and
g) and said pair of piston and cylinder assemblies being adapted to be connected on opposite lateral sides and/or on opposite longitudinal ends of the vehicle to provide both resilient ride suspension characteristics during time when the vehicle body is not subject to acceleration and to provide roll and/or pitch resistance during lateral and/or longitudinal acceleration of the vehicle body.

2. An active suspension system for an automotive highway vehicle comprising a pair of double-acting hydraulic piston and cylinder assemblies and associated gas accumulators, the headside and rodside chambers of the cylinders being interconnected to provide differential suspension compliance as between mutual compression of the piston and cylinder assemblies on the one hand, and compression of one and extension of the other, on the other hand, fluid control means being provided and adapted to displace hydraulic fluid into and out of said piston and cylinder assemblies in proportion to vehicle acceleration sensed by an accelerometer.

3. An active suspension system according to claim 1 wherein said fluid control means comprises fluid displacer means having fluid displacing piston means and an associated electronic control unit adapted to define target positions for said piston means in proportion to said signals from said accelerometer whereby hydraulic fluid is displaced to or from said double-acting piston and cylinder assemblies in proportion to acceleration sensed by said accelerometer.

4. An active suspension system for an automotive highway vehicle comprising an accelerometer to sense vehicle body acceleration and to predict vehicle body movement under suspension compliance, and hydraulic displacer means associated with said accelerometer and adapted to displace hydraulic fluid in response to accelerometer signals whereby suspension actuators can be caused to respond likewise in proportion to said acceleration.

5. A vehicle comprising :
a) a vehicle body having at least two pairs of ground support wheels spaced apart in the travel direction and suspension means supporting said body on said wheels;
b) said suspension means comprising vehicle body anti-roll means comprising a torque-resistant element connected between one of said pairs of wheels of said vehicle and said vehicle body, said wheels of said one of said pairs being laterally spaced apart with respect to the travel direction of said vehicle; and
c) said torque-resistant element being adapted to resist resiliently torque applied thereto in use by said vehicle body;
characterised by
d) said anti-roll means having said torque-resistant element connected at a first location to said one pair of said wheels so as to be able to resist torque transmitted thereto in use from said vehicle body; and
e) said anti-roll means having said torque-resistant element extending from said first location generally in the travel direction of said vehicle and being connected to said vehicle body at a second location intermediate said spaced pairs of ground support wheels and so as to resist body roll at said second location between said pairs of wheels.

6. A vehicle comprising a suspension system wherein a body-roll-resisting torque-resistant element extends from a given wheel pair generally in the travel direction of the vehicle and is coupled to the vehicle body and resists body roll at a location offset from said wheel pair in said travel direction.

7. A vehicle according to claim 5 or claim 6 characterised by said torque-resistant element being connected to said vehicle body at a location generally in the region of the centre of gravity of the vehicle.

8. A vehicle according to any one of claims 5 to 7 characterised by said torque resistant element being connected to said one pair of wheels through a linkage interconnecting independent suspension linkages of said wheels, said linkage being adapted to apply torque to said torque-resistant element from either of said wheels.

9. A vehicle according to any one of claims 5 to 8 characterised by said torque-resistant element being adapted to perform a function additional to that of a torque-resistant element, said additional function of said torque-resistant element comprising acting as a location member for an axle of said vehicle in relation to the chassis thereof.

10. A vehicle according to any one of claims 5 to 9 characterised by said torque-resistant element constituting a first torque-resistant element, and being operatively associated with a first pair of wheels of the vehicle and a second torque-resistant element being provided in relation to a second pair of wheels of the vehicle, and coupling means being provided to couple said first and second torque-resistant elements to the vehicle body so that the degree of roll-resistance provided thereby is determined, said coupling means comprising control means for controlling the degree of roll resistance provided by said first and second torque-resistant elements, said coupling means comprising pivoted lever means pivotally interconnecting the adjacent ends of said torque-resistant elements; and said lever means being coupled to a thrust device operable to increase the torsion in either or both of said torque-resistant elements; and said thrust device comprising a fluid pressure actuator operable to change said torsional loading in either or both of said torque-resistant elements.

11. A vehicle according to claim 10 characterised by a fluid pressure control system to provide automatic control of said fluid pressure actuator in accordance with sensed dynamic parameters of said vehicle's travel characteristics.

12. A vehicle anti roll suspension comprising a pair of double-acting hydraulic cylinder assemblies connected headside to rodside and adapted to the mounted on transversely opposed wheel pairs of a vehicle.
